# EUROPEAN PATENT SPECIFICATION

(11) **EP 3 200 322 B1**
(45) Date of publication and mention of the grant of the patent: **26.02.2020**
(21) Application number: 16153069.6
(22) Date of filing: 28.01.2016
(51) Int. Cl.: H02K 1/32, H02K 3/24

(54) **A ROTOR FOR AN ELECTRIC MACHINE**
ROTOR FÜR EINE ELEKTRISCHE MASCHINE
ROTOR POUR MACHINE ÉLECTRIQUE

(43) Date of publication of application: 02.08.2017
(73) Proprietor: General Electric Technology GmbH, 5400 Baden (CH)
(72) Inventor: Srinivasan, Satish, 5400 Baden (CH); Bahr, Sayantan, 5400 Baden (CH); Giardino, Flavio, 5400 Baden (CH); Olivier, Philippe, 90018 Belfort Cedex (FR)
(74) Representative: BRP Renaud & Partner mbB Rechtsanwälte Patentanwälte Steuerberater

(56) References cited:
- EP-A2- 0 160 887
- DE-B- 1 036 370
- GB-A- 2 470 107
- US-A1- 2015 162 804

## Description

### TECHNICAL FIELD

The present disclosure relates to a rotor of an electric machine.

The electric machine is in particular a rotating electric machine such as a synchronous generator to be connected to a gas or steam turbine, then referred to as turbogenerator, or a synchronous generator to be connected to a hydro turbine, then referred to as hydro generator, or an asynchronous generator or a synchronous or asynchronous electric motor or also other types of electric machines.

### BACKGROUND

Electrically conductive windings are composed to electric coils in electric machines. These coils or windings are made from conductor bars from copper usually. The conductor bars are placed in slots in the core of the rotor or stator of the electric machine. Commonly, for high power generation, due to heating the windings are cooled in operation. Here, a cooling medium flows through a cavity below the slot in an axial direction and from the cavity through the openings in a radial direction of the rotor. The cavity below the slot is referred to as sub-slot in the state of the art. The sub-slot is manufactured in the core of the stator or rotor of the electric machine and extends below the slots of the core. In the state of the art the sub-slot is designed with a constant diameter, i.e. the sub-slot has an even geometry. When the cooling medium enters the sub-slot at one end the bigger part of the cooling means leaves the sub-slot through the openings nearer to the intake without further measures. This leads to an uneven distribution of cooling along the conductor bar. Therefore, in the state of the art a slanted sub-slot is proposed with a varying diameter. The diameter of the sub-slot is bigger at one end, the intake, than at the other end, the outlet of the cooling medium. The flow rate in the direction to the outlet is enhanced by this means then and a more even distribution of cooling along the conductor bar is achieved. From the sub-slot the cooling medium enters one cavity at one end of the slot and passes the conductor bars to a second cavity at the other end of the slot. One possibility to design the axial passage is to provide the conductor bars in a hollow manner for a cooling medium to flow through the conductor bars in an axial direction of the rotor. Another possibility to cool the windings is to bore openings into the conductor bars of windings or into the core next to the conductor bars. US 2015/162804 A1 describes a rotor with axially extending slots and subslots and passages in the radial direction for cooling gas to flow from the subslot outwardly. However, several problems exist with the state of the art cooling devices, as local hot spots which appear along the conductor bars which impair the functionality of the electric machine.

### SUMMARY

It is an object of the invention to provide a rotor of an electric machine with a reliable cooling of the rotor winding. This object is solved with the features of a rotor according to the independent claim.

According to the invention a rotor for an electric machine is disclosed with a rotor core with slots to house conductor bars of winding coils, with sub-slots below the slots to transport a cooling medium via a first radial passage into a first cavity with radially decreasing cross section area, connected to second axially passages, which are connected to a second cavity with radially increasing cross section area, and a second radial passage to radially purge the cooling medium.

Further examples of the invention are described in the dependent claims.

In an example of the invention the first radial passage and/or the second radial passage are created by baffles which form the walls of the first and/or second radial passage. The baffles have openings for a cooling medium to flow through.

In a further example the second passages are recesses of a hollow conductor bar. Alternatively, the second passages are formed in sections of the rotor core next to the conductor bars.

The radially decreasing cross section area is shaped by a first bound of the first cavity. The radially increasing cross section area is shaped by a second bound of the second cavity. In an example the first bound and/or the second bound have slant faces.

In a different example the first cavity with radially decreasing cross section area and the second cavity with radially increasing cross section area are formed by a slanted profile of the conductor bars. Alternatively, the first bound of the first cavity and/or the second bound of the second cavity are cascaded and form a step-like limitation in the conductor bars.

In an additional aspect of the invention the sub-slots in the rotor are shaped with a first straight wall in a first area, with an inclined wall in an second area with a variable diameter adjacent to the first area, and with a second straight wall in a third area adjacent to the second area. By this means the cooling distribution in the rotor core is more even. In one example of this aspect the first straight wall has a length in the range between 10cm and 80cm and the second straight wall has a length in the range between 10cm and 100cm.

### BRIEF DESCRIPTION OF THE DRAWINGS

Further characteristics and advantages will be more apparent from the description of a preferred but non-exclusive embodiment of the rotor, illustrated by way of non-limiting example in the accompanying drawings, in which:
- Fig. 1: shows a cut front view of a slot of a rotor core with conductor bars housed into the slot with passages in the conductor bars to transport a cooling medium lengthwise to the rotor core, and a sub-slot formed in the rotor core below the slot;
- Fig. 2: shows a front view of a rotor of an electric machine with a rotor shaft, a rotor core, with a multitude of slots in the rotor core and hollow conductor bars included into these slots;
- Fig. 3: shows a schematic cut side view of a part of a rotor core with a longitudinal slot with conductor bars stacked in the slot, a first cavity formed in the conductor bars with radially decreasing cross section area for a cooling medium to be directed through the conductor bars, a second cavity formed in the conductor bars with radially increasing cross section area for the cooling medium after passing the conductor bars, with a sub-slot formed into the rotor core, whereby the sub-slot has three areas confined by two straight walls and one inclined wall;
- Fig. 4: shows a schematic cut side view similar to Fig. 3 with the first cavity and the second cavity with a first bound and a second bound designed in the conductor bars as cascades;
- Fig. 5: shows a schematic cut side view similar to Figs. 3 and 4 wherein the first cavity with radially decreasing cross section area and the second cavity with radially increasing cross section area are formed by slanted profiles of the conductor bars while a first bound and a second bound are straight;
- Fig. 6: shows a diagram with outlet areas along the rotor at the horizontal axis and the flow rate of a cooling medium at the vertical axis, which illustrates the flow rate distribution of an example of the invention compared to an example of the state of the art.

### DETAILED DESCRIPTION OF EXEMPLARY EMBODIMENTS

With reference to the figures, these show different views of rotor parts and a histogram of a flow rate of cooling medium, wherein like reference numerals designate identical or corresponding parts throughout the several views.

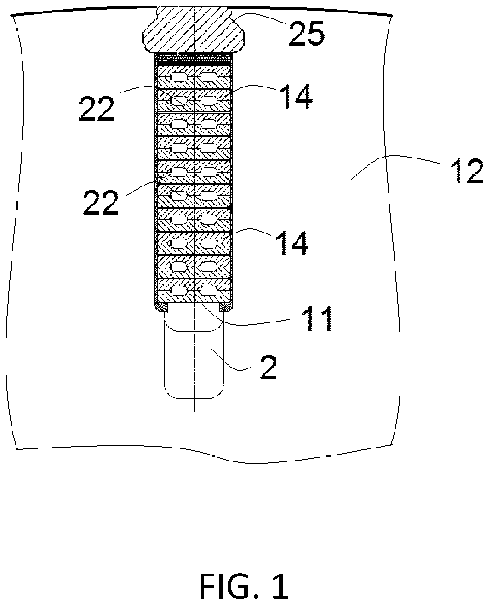

Fig. 1 shows a cut front view of a single slot 11 of a cut part of a rotor core 12 with conductor bars 14 stacked into the slot 11. The conductor bars 14 are hollow, commonly from copper, and vertically stacked in the slot 11. The hollow openings in the conductor bars 14 serve for the transport of a cooling medium in the horizontal direction to cool the conductor bars 14 in operation. The hollow openings in the conductor bars 14 are referred to as passages 22 hereinafter. Below the slot 11 a sub-slot 2 is formed in the rotor core 12 with a smaller diameter than the slot 11. The sub-slot 2 is arranged below the conductor bars 14 correspondingly and establishes an open passage to transport the cooling medium in the horizontal direction of the rotor core 12. Thus, the flow direction in the sub-slot 2 is the same as in the passages 22. The shown slot 11 with conductor bars 14 is shut with a wedge 25 mounted at the top end of the slot 11.

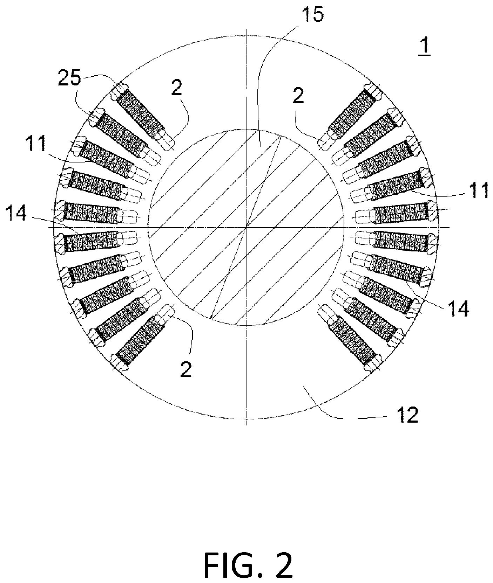

Fig. 2 shows a front view of a rotor 1 of an electric machine with a rotor shaft 15 and the rotor core 12 according to Fig. 1. The rotor shaft 15 and the rotor core 12 are designed as a one-piece single entity. This type of rotor 1 is commonly known as non-salient rotor. The rotor shaft 15 and the rotor core 12 are massive. Here, a multitude of slots 11 in the rotor core 12 are shown, in this example twenty slots 11 milled into the rotor core 12 along the length of the rotor core 12. Similar to Fig. 1 all slots 11 house hollow conductor bars 14 and finish with wedges 25 at the outer diameter of the rotor 1. The hollow spaces in the conductor bars 14 are suitable for the passage of the cooling medium. Similar to Fig. 1 below each slot 11 a sub-slot 2 is formed in the rotor core 12. The sub-slots 2 are formed along the most or the whole length of the rotor core 12. In operation of the electric machine the cooling medium enters the sub-slots 2 and passes the hollow conductor bars 14 as is described below in more detail.

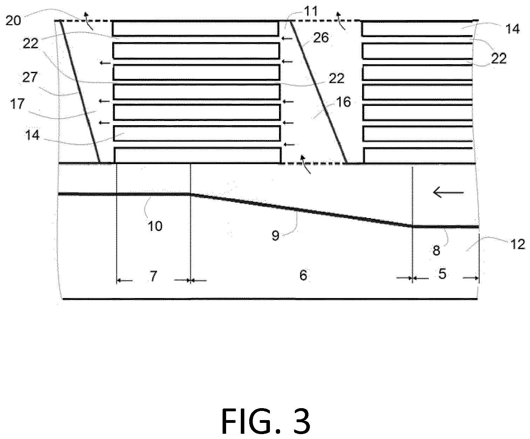

Fig. 3 shows a schematic cut side view of a part of a rotor core 12 in a different perspective. The rotor core 12 is part of the rotor 1 which commonly comprises the rotor core 12, the rotor shaft 15 and the rotor winding. Here, rotor the core 12 and the rotor shaft 15 are one-piece. Fig. 3 shows a cut part of one of several slots 11 formed axially into the rotor core 12 to house each one or more conductor bars 14. The conductor bars 14 project horizontally along the slot 11 in the rotor core 12 and end with end windings at the end sections of the rotor 1. Passages 22 are manufactured into the conductor bar 14 in the horizontal direction of the rotor 1. The proportions are not original in Fig. 3 for sake of illustration, the passages 22 are actually smaller and the conductor bars 14 are actually longer in relation to the other parts described. The sub-slot 2 is formed in the massive rotor core 12 below the slot 11. The sub-slot 2 has a smaller breadth in the tangential direction of the rotor 1 than the slot 11. The sub-slot 2 comprises three areas 5, 6, 7, a first area 5, a second area 6, and a third area 7. The first area 5 is next to the inlet of the cooling means and has a straight first wall 8 at the bottom which confines the sub-slot 2 from the rotor core 12. Correspondingly, the first area 5 of the sub-slot 2 has a constant diameter. The first wall 8 and the first area 5 correspondingly have a length in the range between 10cm and 80cm. This range of length is rather small compared to the overall length of the rotor core 12 which is in the range of meters. Following the first area 5 a second area 6 is formed in the rotor core 12. The second area 6 is confined by an inclined wall 9 to the rotor core 12 at the face distant to the slot 11. Accordingly, the cross section area of the second area 6 decreases in the direction of a cooling medium flow, in Fig. 3 the left direction. The cooling medium enters the sub-slot 2 to the first area 5 of the sub-slot 2 as illustrated by the arrow at the right. The cooling medium is commonly air or hydrogen. The third area 7 has a constant cross section area again confined by a second straight wall 10 at the bottom. From the sub-slot 2 the cooling medium enters a first cavity 16 via a first passage 19, as is illustrated by the bended arrow in Fig. 3. The first passage 19 is an opening or a baffle with holes between the slot 11 and the sub-slot 2 in the conductor bar 14. The first cavity 16 is drilled in the conductor bar 14 in this example and has a decreasing cross section area in the radial direction. The confinement of the first cavity 16 to the adjacent part of the conductor bar 14 is referred to as first bound 26. The first bound 26 has an evenly slanted surface. From the first cavity 16 the cooling medium passes the passages 22 in the conductor bars 14 in a horizontal direction. After flowing through the passages 22 the cooling medium reaches a second cavity 17 drilled in the conductor bars 14. The second cavity 17 has a radially increasing cross section area. The second cavity 17 is shaped by a second bound 27 with a slanted surface. The second bound 27 defines a limitation for the cooling medium in the conductor bars 14. The cooling medium passes the second cavity 17 and leaves the slot 11 and the conductor bars 14 via a second passage 20, as is illustrated by the bended arrow above in Fig. 3. The second passage 20 is an opening in the conductor bars 14 similar to the first passage 19. In an alternative the first cavity 16, the second cavity 17, and the passages 22 are formed in the walls of the rotor core 12 surrounding the slots 11. The cooling means flow is then next to and alongside the conductor bars 14 correspondingly.

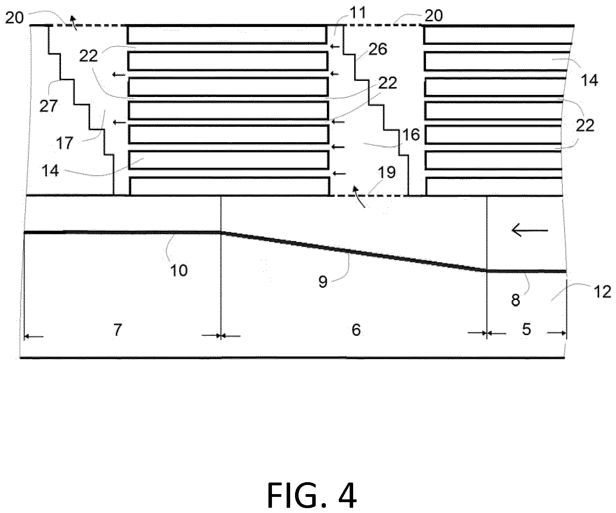

Fig. 4 shows a schematic cut side view similar to Fig. 3. As in the example above the first cavity 16 and the second cavity 17 are formed in the conductor bars 14 which are housed in the slot 11 of the rotor core 12. Here, the first bound 26 and the second bound 27 are designed in the conductor bars 14 as cascades. Steps are drilled in the conductor bars 14 which confine the first cavity 16 and the second cavity 17 from adjacent parts of the conductor bars 14. The cross section area decrease of the first cavity 16 and the cross section area increase of the second cavity 17 are similar to the example above. Here, the first bound 26 is also a bound for a cavity in the conductor bars 14 before, which is identically arranged as the second cavity 17. The first bound 26 is thus provided as a separation wall in this example. The shape of the first cavity 16 and the second cavity 17 influences the flow of the cooling medium.

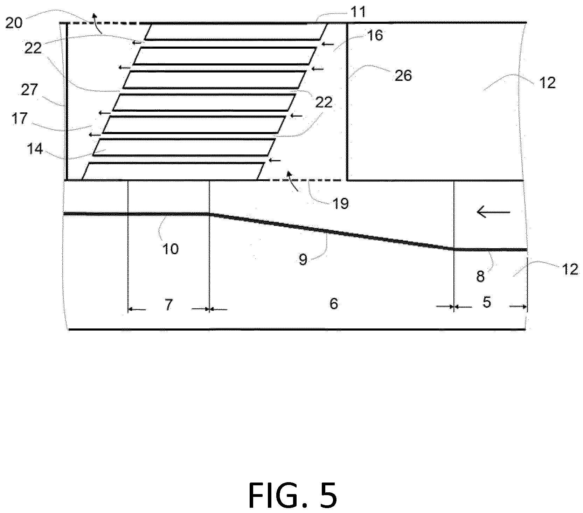

Fig. 5 shows a schematic cut side view similar to Figs. 3 and 4. In this example the first bound 26 and the second bound 27 are vertical straight walls formed in the conductor bars 14. The first cavity 16 with radially decreasing cross section area and the second cavity 17 with radially increasing cross section area are created by shaping the conductor bars 14 with slanted profiles. The parts of the conductor bars 14 are shaped as parallelograms to create a slanted profile, as can be seen schematically in Fig. 5. The shaping of the conductor bars 14 is even along the radial direction such that the first cavity 16 and the second cavity 17 form rhombuses, similar to the example of Fig. 3.

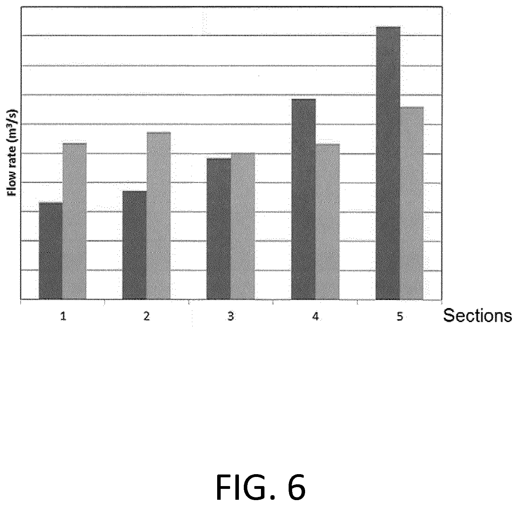

Fig. 6 shows a diagram with five sections along the rotor at the horizontal axis and the flow rate of a cooling medium in the rotor core 12 at the vertical axis in m³/s. The rotor core 12 is divided in five sections in which the flow rate is illustrated by histograms. The flow rate is measured in state of the art solutions with pillars in each section at the left. The flow rate of an example of the invention with a first cavity 16, a second cavity 17, and a sub-slot 2 as described is illustrated with pillars in each section at the right. It is apparent from the histograms that near the entry of the rotor core 12 in section one the flow rate of the example of the invention is higher. This is the same for section two and three along the rotor core 12. In the sections four and five near the distant end of the rotor core 12 the flow rate of the state of the art solution is higher. In particular, the flow rate distribution of the example of the invention along the five sections is more even compared to the example of the state of the art. The state of the art rotor is characterized by an uneven distribution of the flow rate and consequently the cooling of the conductor bars 14. The flow rate of the cooling medium approximately triples from section one to section five while in the example of the invention only in section five a substantial deviation is measured. There, the flow rates in the sections one to four are nearly equal.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be solely defined by the claims appended hereto.

### REFERENCE NUMBERS

- 1: rotor
- 2: sub-slot
- 5: first area
- 6: second area
- 7: third area
- 8: first straight wall
- 9: inclined wall
- 10: second straight wall
- 11: slot
- 12: rotor core
- 14: conductor bar
- 15: rotor shaft
- 16: first cavity
- 17: second cavity
- 19: first radial passage
- 20: second radial passage
- 22: passages
- 25: wedge
- 26: first bound
- 27: second bound

## Claims

1. A rotor (1) for an electric machine with a rotor core (12) with slots (11) to house conductor bars (14) of winding coils, with sub-slots (2) below the slots (11) that are designed to transport a cooling medium via a first radial passage (19) located at the slots (11) through which the cooling medium can enter from the sub-slots (2) into a first cavity (16), which has a radially decreasing cross section area towards the outside of the rotor (1), passages (22) that extend in the axial direction and through which the cooling medium can pass to the enter into a second cavity (17) located in the slots (11), and a second radial passage (20) through which the cooling medium can be purged, **characterized in that** the second cavity (17) has a radially increasing cross section area towards the outside of the rotor (1) and the first cavity (16) and the second cavity (17) are bores in the conductor bars (14) and the second passages (22) which connect the first cavity (16) with the second cavity (17) are recesses of a hollow conductor bar (14) .

2. The rotor according to claim 1, **characterized in that** the first cavity (16), the second cavity (17), and the second passages (22) are openings formed in sections of the rotor core (12) next to the conductor bar (14).

3. The rotor according to claim 1, **characterized in that** the first radial passage (19) and/or the second radial passage (20) is a baffle with openings.

4. The rotor according to claim 1, **characterized in that** a first bound (26) of the first cavity (16) and/or a second bound (26) of the second cavity (16) have slant faces.

5. The rotor according to claim 1, **characterized in that** a first bound (26) of the first cavity (16) and/or a first bound (26) of the second cavity (16) is cascaded.

6. The rotor according to claim 1, **characterized in that** the first cavity (16) with radially decreasing cross section area and the second cavity (17) with radially increasing cross section area is formed by a slanted profile of the conductor bars (14).

7. The rotor according to claim 1, **characterized in that** sub-slots (2) below the slots (11) transport the cooling medium to the conductor bars (14), wherein the sub-slots (2) are shaped with a first straight wall (8) in a first area (5), with an inclined wall (9) in a second area (6) with a variable diameter adjacent to the first area (5), and with a second straight wall (10) in a third area (7) adjacent to the second area (6).

8. The rotor according to claim 7, **characterized in that** the first straight wall (8) has a length in the range between 10cm and 80cm and the second straight wall (10) has a length in the range between 10cm and 100cm.

## Patentansprüche

1. Rotor (1) für eine elektrische Maschine mit einem Rotorkern (12) mit Schlitzen (11) zur Aufnahme von Stromschienen (14) von Wickelspulen, mit Unterschlitzen (2) unterhalb der Schlitze (11), die zum Transport eines Kühlmittels über einen ersten radialen Durchlass (19) an den Schlitzen (11) vorgesehen sind, durch den das Kühlmittel aus den Unterschlitzen (2) in einen ersten Hohlraum (16) eintreten kann, der einen radial abnehmenden Querschnittsbereich zur Außenseite des Rotors (1) hin aufweist, Durchlässen (22), die in axialer Richtung verlaufen und durch die das Kühlmittel zum Eintritt in einen zweiten Hohlraum (17) in den Schlitzen (11) gelangen kann, und einem zweiten radialen Durchlass (20), durch den das Kühlmittel herausgespült werden kann, **dadurch gekennzeichnet, dass** der zweite Hohlraum (17) einen radial zunehmenden Querschnittsbereich zur Außenseite des Rotors (1) hin aufweist und es sich bei dem ersten Hohlraum (16) und dem zweiten Hohlraum (17) um Bohrungen in den Stromschienen (14) und bei den zweiten Durchgängen (22), die den ersten Hohlraum (16) mit dem zweiten Hohlraum (17) verbinden, um Aussparungen einer hohlen Stromschiene (14) handelt.

2. Rotor nach Anspruch 1, **dadurch gekennzeichnet, dass** es sich bei dem ersten Hohlraum (16), dem zweiten Hohlraum (17) und den zweiten Durchlässen (22) um Öffnungen handelt, die in Abschnitten des Rotorkerns (12) neben der Stromschiene (14) ausgebildet sind.

3. Rotor nach Anspruch 1, **dadurch gekennzeichnet, dass** es sich bei dem ersten radialen Durchlass (19) und/oder dem zweiten radialen Durchlass (20) um ein Leitblech mit Öffnungen handelt.

4. Rotor nach Anspruch 1, **dadurch gekennzeichnet, dass** eine erste Begrenzung (26) des ersten Hohlraums (16) und/oder eine zweite Begrenzung (26) des zweiten Hohlraums (16) schräge Flächen aufweisen.

5. Rotor nach Anspruch 1, **dadurch gekennzeichnet, dass** eine erste Begrenzung (26) des ersten Hohlraums (16) und/oder eine erste Begrenzung (26) des zweiten Hohlraums (16) kaskadiert ist.

6. Rotor nach Anspruch 1, **dadurch gekennzeichnet, dass** der erste Hohlraum (16) mit radial abnehmender Querschnittsfläche und der zweite Hohlraum (17) mit radial zunehmender Querschnittsfläche durch ein geneigtes Profil der Stromschienen (14) ausgebildet sind.

7. Rotor nach Anspruch 1, **dadurch gekennzeichnet, dass** Unterschlitze (2) unterhalb der Schlitze (11) das Kühlmittel zu den Stromschienen (14) transportieren, wobei die Unterschlitze (2) mit einer ersten geraden Wand (8) in einem ersten Bereich (5), mit einer geneigten Wand (9) in einem zweiten Bereich (6) mit variablem Durchmesser angrenzend an den ersten Bereich (5) und mit einer zweiten geraden Wand (10) in einem dritten Bereich (7) angrenzend an den zweiten Bereich (6) ausgebildet sind.

8. Rotor nach Anspruch 7, **dadurch gekennzeichnet, dass** die erste gerade Wand (8) eine Länge im Bereich zwischen 10 cm und 80 cm und die zweite gerade Wand (10) eine Länge im Bereich zwischen 10 cm und 100 cm aufweist.

## Revendications

1. Rotor (1) pour une machine électrique avec un noyau de rotor (12) avec des fentes (11) pour loger des barres conductrices (14) de bobines d'enroulement, avec des sous-fentes (2) sous les fentes (11) qui sont conçues pour transporter un milieu de refroidissement par l'intermédiaire d'un premier passage radial (19) situé au niveau des fentes (11) à travers lequel le milieu de refroidissement peut pénétrer à partir des sous-fentes (2) dans une première cavité (16), qui présente une surface en coupe transversale radialement décroissante vers l'extérieur du rotor (1), des passages (22) qui s'étendent dans la direction axiale et à travers lesquels le milieu de refroidissement peut passer pour entrer dans une seconde cavité (17) située dans les fentes (11), et un second passage radial (20) à travers lequel le milieu de refroidissement peut être purgé, **caractérisé en ce que** la seconde cavité (17) présente une surface en coupe transversale radialement croissante vers l'extérieur du rotor (1) et la première cavité (16) et la seconde cavité (17) sont des alésages dans les barres conductrices (14) et les seconds passages (22) qui relient la première cavité (16) avec la seconde cavité (17) sont des cavités d'une barre conductrice creuse (14).

2. Rotor selon la revendication 1, **caractérisé en ce que** la première cavité (16), la seconde cavité (17) et les seconds passages (22) sont des ouvertures formées dans des sections du noyau de rotor (12) à côté de la barre conductrice (14).

3. Rotor selon la revendication 1, **caractérisé en ce que** le premier passage radial (19) et/ou le second passage radial (20) est un déflecteur à ouvertures.

4. Rotor selon la revendication 1, **caractérisé en ce qu'**une première limite (26) de la première cavité (16) et/ou une seconde limite (26) de la seconde cavité (16) ont des faces inclinées.

5. Rotor selon la revendication 1, **caractérisé en ce qu'**une première limite (26) de la première cavité (16) et/ou une première limite (26) de la seconde cavité (16) est en cascade.

6. Rotor selon la revendication 1, **caractérisé en ce que** la première cavité (16) à surface en coupe transversale radialement décroissante et la seconde cavité (17) à surface en coupe transversale radialement croissante sont formées par un profil incliné des barres conductrices (14).

7. Rotor selon la revendication 1, **caractérisé en ce que** les sous-fentes (2) sous les fentes (11) transportent le milieu de refroidissement vers les barres conductrices (14), dans lequel les sous-fentes (2) sont façonnées avec une première paroi droite (8) dans une première surface (5), avec une paroi inclinée (9) dans une deuxième surface (6) avec un diamètre variable adjacent à la première surface (5), et avec une seconde paroi droite (10) dans une troisième surface (7) adjacente à la deuxième surface (6).

8. Rotor selon la revendication 7, **caractérisé en ce que** la première paroi droite (8) a une longueur comprise entre 10 cm et 80 cm et la seconde paroi droite (10) a une longueur comprise entre 10 cm et 100 cm.
